(19) Europäisches Patentamt
European Patent Office
Office européen des brevets

(11) **EP 2 000 498 B1**

(12) **EUROPÄISCHE PATENTSCHRIFT**

(45) Veröffentlichungstag und Bekanntmachung des Hinweises auf die Patenterteilung:
**18.03.2015 Patentblatt 2015/12**

(21) Anmeldenummer: **08010030.8**

(22) Anmeldetag: **02.06.2008**

(51) Int Cl.:
***C08J 5/18*** *(2006.01)*      ***C08L 67/02*** *(2006.01)*
***C08K 3/22*** *(2006.01)*      ***C08K 3/24*** *(2006.01)*
***B32B 27/36*** *(2006.01)*

(54) **Weisse Polyesterfolie für Karten**

White polyester sheet for cards

Feuille blanche de polyester pour cartes

(84) Benannte Vertragsstaaten:
**DE FR GB IT LU**

(30) Priorität: **08.06.2007 DE 102007026553**

(43) Veröffentlichungstag der Anmeldung:
**10.12.2008 Patentblatt 2008/50**

(73) Patentinhaber: **Mitsubishi Polyester Film GmbH**
**65203 Wiesbaden (DE)**

(72) Erfinder:
• **Jesberger, Martin, Dr.**
**55122 Mainz (DE)**
• **Kliesch, Holger, Dr.**
**65462 Ginsheim-Gustavsburg (DE)**
• **Kuhmann, Bodo**
**65594 Runkel (DE)**
• **Klein, Oliver, Dr.**
**55437 Ockenheim (DE)**

• **Hora, Franz**
**65830 Kriftel (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**US-A1- 2003 017 317      US-A1- 2006 275 593**
**US-B1- 6 436 219**

• **DATABASE WPI Week 200663 Thomson Scientific, London, GB; AN 2006-605478 XP002493189 -& JP 2006 212925 A (TEIJIN DUPONT FILMS KK) 17. August 2006 (2006-08-17)**
• **DATABASE WPI Week 198748 Thomson Scientific, London, GB; AN 1987-338249 XP002493190 -& JP 62 243120 A (TEIJIN LTD) 23. Oktober 1987 (1987-10-23)**

EP 2 000 498 B1

**Beschreibung**

Die Erfindung betrifft die Verwendung einer weiß-opaken Polyesterfolie mit spezifischen optischen Eigenschaften für die Kartenanwendung. Die Folie enthält Bariumsulfat als Weißpigment und ein Additiv zur Verschiebung der UV-Absorptionsbande. Durch den Zusatz dieses Additivs wird die UV-VIS-Absorptionsbande selektiv in Richtung höherer Wellenlängen verschoben.

Es besteht ein Bedarf an weiß-opaken Polyesterfolien für den Einsatz z. B. als ID-Karten, Kreditkarten oder RFID-Tags. Zum einen sollen die Karten in der Lage sein, darin eingearbeitete Sicherheitsmerkmale wie Elektronikchips, RFID-Antennen o. ä. blickdicht abzudecken, so dass sie vom menschlichen Auge nicht wahrgenommen werden können; d. h. die Karten selbst sollen weiß sein und/oder opak, so dass die oben genannten eingebetteten Strukturen nicht mehr erkannt werden. Zum anderen sollen die Karten darüber hinaus die Möglichkeit bieten, UV-detektierbare Sicherheitsmerkmale zu erkennen, d. h. auf- oder eingebrachte UV-Reflektoren z. B. mit herkömmlichen UV-Lampen, welche im Wellenlängenbereich von 254 nm bzw. 365 nm arbeiten, zu erkennen. Dadurch können dann z. B. Implantate, Aufkleber und sonstige Sicherheitsmerkmale auf und in der Karte einwandfrei detektiert werden.

Ein Problem hierbei ist jedoch, dass viele herkömmliche weiß/opake Polyesterfolien Additive enthalten, welche bei den oben genannten UV-Wellenlängen angeregt werden. Enthält eine Basisfolie bereits solche Komponenten, so kann der Beobachter die aufgebrachten (UV-)Sicherheitsmerkmale nicht mehr von dem Rest der Karte unterscheiden.

Weiß-opake Folien mit einer Dicke zwischen 10 und 500 $\mu$m als solche sind bekannt.

In der EP-**A-1 125 967** sind weiß-opake Folien aus kristallisierbaren Thermoplasten beschrieben. Die Folien enthalten lediglich Bariumsulfat als Weißpigment und einen optischen Aufheller. Bei der Einstrahlung eines Lichtes mit der Wellenlänge von 365 nm kommt es zu einer starken Fluoreszenz. Die Folie ist nicht für Karten geeignet, da die Sicherheitsmerkmale nicht mehr von der Basisfolie unterschieden werden können.

Die EP-A-1 125 966 beschreibt eine weiß-opake Folie mit einer Dicke im Bereich von 10 bis 500 $\mu$m, die als Hauptbestandteil einen kristallisierbaren Thermoplasten enthält, wobei die Folie mindestens Bariumsulfat als Weißpigment, mindestens einen UV-Stabilisator als Lichtschutzmittel, mindestens ein Flammschutzmittel und mindestens einen optischen Aufheller enthält. Der Anteil Bariumsulfat in der Folie liegt in einem Bereich von 0,2 bis 40 Gew.-%, der UV-Stabilisator als Lichtschutzmittel in einem Bereich von 0,01 bis 5Gew.-%, das Flammschutzmittel in einem Bereich von 0,5 bis 30,0 Gew.-% und der optische Aufheller in einem Bereich von 10 bis 10.000 ppm, bezogen auf das Gewicht des Thermoplasten. Durch die vielfältige Eigenschaftskombinationen eignet sich diese Folie für verschiedene Anwendungen, beispielsweise für Innenraumverkleidungen, für den Messebau und Messeartikel, für Displays und für Schilder, für Etiketten, für Schutzverglasungen von Maschinen und Fahrzeugen, im Laden- und Regalbau als Werbeartikel, Kaschiermedium und in Lebensmittelanwendungen. Die Folie zeigt bei Einstrahlung mit einer Wellenlänge von 365 nm eine geringe Fluoreszenz, die entsprechend der zuvor beschriebenen Sicherheitsanwendung störend ist. Weiterhin hat sich die Folie durch Zusatz von UV-Stabilisatoren vergilbt und damit das Aussehen des Druckbilds mit den eingesetzten Standardfarben verändert. Dadurch eignet sich diese Folie nicht für Karten.

In der US-A 4,780,402 werden weiße Folien mit Bariumsulfat beschrieben, die gegebenenfalls optischen Aufheller und gegebenenfalls ein unverträgliches Polymer enthalten. Folien mit Bariumsulfat ohne optischen Aufheller zeigen eine Fluoreszenz, die zwar deutlich niedriger ist als oben für EP-**A-1 125 967** oder EP-A-1 125 966 beschrieben; die Absenkung der Fluoreszenz reicht aber dennoch nicht aus, die Sicherheitsmerkmale eindeutig zu detektieren.

Aufgabe der vorliegenden Erfindung war es daher, eine weiß-opake Folie mit einer Foliendicke von 10 bis 500 $\mu$m bereitzustellen, die neben einer guten Verstreckbarkeit optische Eigenschaften bereitstellt, die gewährleisten, dass insbesondere UV-Sicherheitsmerkmale sicher erkannt werden. Bevorzugt soll die Folie darüber hinaus eine gute Haftung zu Klebesystemen aufweisen, da solche Karten gewöhnlich gegen andere Materialien wie z. B. PVC, PC und PETG laminiert werden.

Unter einer guten Verstreckbarkeit wird verstanden, dass die Folie kontinuierlich über einen Zeitraum von mindestens 24 Stunden ohne Abrisse produziert werden kann.

Zu den wünschenswerten optischen Eigenschaften zählen:

-   eine Transparenz von <60 %, bevorzugt <50 %, besonders bevorzugt <40 %;
-   ein Weißgrad (nach Berger) von >60, bevorzugt >70, besonders bevorzugt >80;
-   eine Reflektion bei $\lambda$=254 nm von <50 %, bevorzugt <40 %, besonders bevorzugt <30 %, und
-   eine Reflektion bei $\lambda$=365 nm von <50 %, bevorzugt <40 %, besonders bevorzugt <30 % und
-   eine Reflektion bei $\lambda$=400 nm von <100 % und $\geq$50 %, bevorzugt <95 % und $\geq$55 %, besonders bevorzugt <90 % und $\geq$60 %.

Die Aufgabe wird erfindungsgemäß gelöst durch die Verwendung einer weißen, ein- oder mehrschichtigen, biaxial orientierten Polyesterfolie, wobei

a) die Folie Bariumsulfat in einer Konzentration von 5 bis 25 Gew.-% (bezogen auf das Gewicht der Folie) enthält und

b) Titandioxid in einer Menge von mindestens 1,0 Gew.-% .-% (bezogen auf das Gewicht der Folie) enthält, wobei das Titandioxid die Absorptionsbande des Polyesters zu höheren Wellenlängen hin verschiebt, so dass eine Fluoreszenz im nahen UV-Bereich verhindert bzw. minimiert wird und aufgebrachte Sicherheitsmerkmale leicht durch den Beobachter identifiziert werden können, und

c) eine oder beide Oberflächen der Polyesterfolie mit einem Haftvermittler versehen sind, um die Haftung zwischen der Polyesterfolie und einem Klebersystem zu vermitteln

wobei die Folie keine Zusätze von optischen Aufhellern, die bei λ=400nm ≥95% reflektieren, enthält, zur Herstellung von Karten, in denen UV-detektierbare Sicherheitsmerkmale zu erkennen sind.

In der bevorzugten Ausführungsform ist die Folie ein- oder dreischichtig aufgebaut.

**Zusammensetzung der Folie bzw. der Basisschicht (B) einer Mehrschichtfolie**

Die Folie in der Ausführung als einschichtige Folie bzw. die Basisschicht (B) der Folie in der Ausführung als mehrschichtige Folie besteht zweckmäßigerweise zu mindestens 80 Gew.-%, bevorzugt zu mindestens 85 Gew.-% und besonders bevorzugt zu mindestens 90 Gew.-%, aus einem thermoplastischen Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat, PCDT)] sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, insbesondere zu mindestens 95 Mol-%, aus Ethylenglykolabgeleiteten und Terephthalsäureabgeleiteten Einheiten oder aus Ethylenglykolabgeleiteten und Naphthalin-2,6-dicarbonsäureabgeleiteten Einheiten bestehen. Die restlichen Monomereinheiten stammen dann aus anderen aliphatischen, cycloaliphatischen oder aromatischen Diolen bzw. anderen Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkananteil geradkettig oder verzweigt sein kann.

Bevorzugt besteht die Folie in der Ausführung als einschichtige Folie bzw. die Basisschicht (B) der Folie aus Polyethylenterephthalat.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann aber ebenso gut nach dem Direktveresterungsverfahren in Gegenwart von Polykondensationskatalysatoren erfolgen. Dabei geht man direkt von den Dicarbonsäuren und den Diolen aus.

**Zusammensetzung gegebenenfalls vorhandener weiterer Schichten der Folie**

Für die Deckschicht (A), für eine eventuell vorhandene weitere Deckschicht (C) und für eventuell vorhandene Zwischenschichten (D) und (E) werden bevorzugt die gleichen Polymere verwendet wie sie zuvor für die Monofolie bzw. Basisschicht (B) angegeben wurden. Besonders bevorzugt enthalten die Basisschicht (B) und die weiteren Schichten identische Polymere (Polyester).

**Weißpigment**

Zur Erzielung der gewünschten niedrigen Transparenz (<60 %) und des gewünschten hohen Weißgrades (>60) der Folie wird in die einschichtige Folie bzw. bei einer mehrschichtigen Folie in die Basisschicht (B) und zumindest in eine Deckschicht (A), gegebenenfalls aber auch in vorhandene andere Schichten, ein Weißpigment eingearbeitet. Die Folie enthält Bariumsulfat als Weißpigment, wobei die Menge an Bariumsulfat vorzugsweise im Bereich zwischen 5 und 25 Gew.-%, besonders bevorzugt zwischen 10 und 25 Gew.-% und ganz besonders bevorzugt zwischen 15 und 25 Gew.%, jeweils bezogen auf das Gewicht der Weißpigment enthaltenden Schicht, liegt. Vorzugsweise wird das Bariumsulfat bei der Polyesterherstellung zudosiert, wobei die Bariumsulfatteilchen üblicherweise zu dem Glykol hinzugegeben werden, aus dem der Polyester hergestellt wird.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die beispielsweise in Kunststoff-Journal 8, Nr. 10, 30-36 **und** Nr. 11, 36-31 (1974**)** beschrieben sind, hergestellt werden.

Die mittlere Teilchengröße ($d_{50}$) des Bariumsulfats liegt zweckmäßigerweise im Bereich von 0,1 bis 5,0 $\mu$m, bevorzugt im Bereich von 0,15 bis 4,0 $\mu$m und besonders bevorzugt im Bereich von 0,2 bis 3,0 $\mu$m.

**Additiv zur Verschiebung der Absorptionsbande zu höheren Wellenlängen**

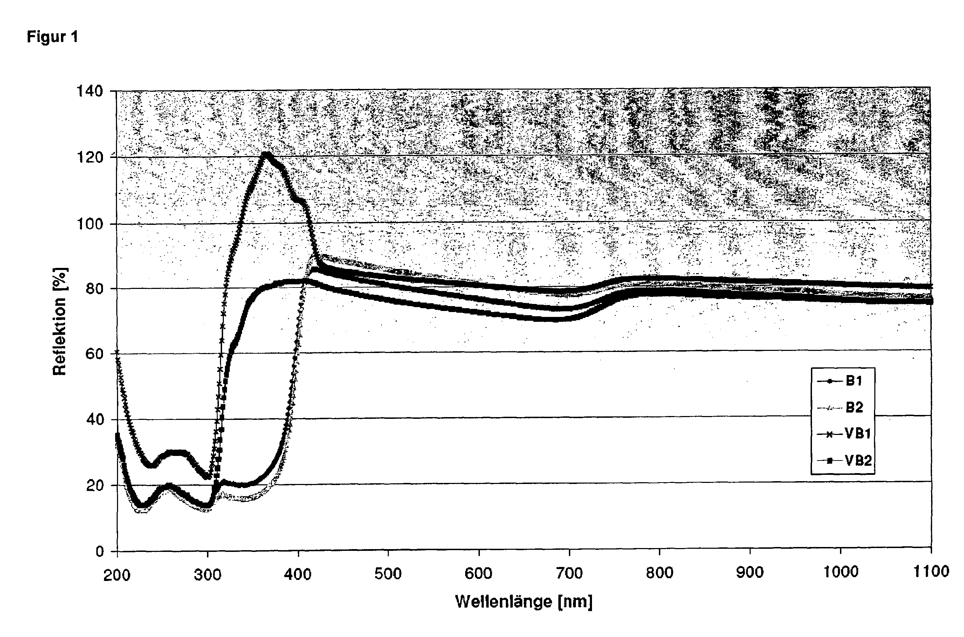

Durch den Zusatz von ≥1,0 und ≤15 Gew.-%, bevorzugt ≥1,0 und ≤10 Gew.-% und besonders bevorzugt ≥1,0 und ≤5 Gew.-%, Titandioxid wird die UV-Bande merklich zu größeren Wellenlängen hin verschoben (s. Figur 1). Das Titandioxid kann sowohl vom Rutiltyp als auch vom Anatastyp sein. Vorzugsweise wird der Rutiltyp verwendet, da überraschend zur Erzielung der notwendigen Transparenz geringere Mengen an Rutil-Titandioxid benötigt werden als an Anatas-Titandioxid. Zur Erzielung der gleichen Transparenz wird bei Verwendung von Anatas-Titandioxid ca. 0,5 % mehr benötigt.

Der Zusatz von weniger als 1,0 Gew.-% Titandioxid führt zu einer Reflektion bei λ=365 nm von >50 %. Diese Reflektion verhindert bzw. minimiert die Identifizierung der aufgebrachten Sicherheitsmerkmale, was unerwünscht ist. Die Korngröße des Titandioxids liegt zweckmäßigerweise zwischen 0,1 und 5 $\mu$m, bevorzugt zwischen 0,1 und 0,5 $\mu$m und besonders bevorzugt zwischen 0,1 und 0,3 $\mu$m. Partikelgrößen von kleiner als 0,1 $\mu$m, so genannte Nanopartikel, senken die Transparenz weniger stark ab gegenüber den in der Erfindung verwendeten grobkörnigeren Partikeln. Die Verwendung von diesen Nanopartikeln hätte zur Folge, dass ein höherer Anteil von Titandioxid eingesetzt werden müsste, um die gleich starke Lichtundurchlässigkeit zu erzielen. Aus wirtschaftlichen Gründen wird auf die wesentlich teureren Nanopartikel in dieser Anwendung verzichtet. Bei Einsatz von Partikeln >5 $\mu$m kommt es zu Schwierigkeiten bei der Einarbeitung der groben Körner in die Folie. Dadurch wird der Prozess verfahrenstechnisch weniger laufsicher. Eine abrissfreie 24 Stunden-Produktion ist nicht mehr möglich.

Die Folie kann noch zusätzlich weitere Additive wie UV-Absorber, Antiblockmittel, Hydrolysestabilisatoren, Weißpigmente, organische oder anorganische Farbstoffe etc. enthalten, die eine oder mehrere zusätzliche Eigenschaften wie z. B. Änderung der Farbe hinzufügen. Der UV-Absorber kann beispielsweise in einer Konzentration von 0,01 bis 5,0 Gew.-%, bevorzugt 0,01 bis 3,0 Gew.-% und besonders bevorzugt 0,01 und 1,0 Gew.-%, bezogen auf das Gewicht der den UV-Absorber enthaltenden Schicht, eingesetzt werden. Als UV-Absorber werden dabei vorzugsweise Triazine, z.B. Tinnuvin®1577 der Firma Ciba, Basel, CH, verwendet. Die Folie enthält keine Zusätze von optischen Aufhellern, die bei λ=400 nm ≥95 % reflektieren.

Durch die Zugabe von Titandioxid und/oder UV-Absorber wird die Bande bei λ=365 nm abgeschnitten (s. Figur 1). Eine eventuelle Anwesenheit von optischen Aufhellern, die bei λ=400 nm ≥100 % reflektieren, kann deshalb leicht mit handelsüblichen UV-Lampen (λ=365 nm; Intensität bei 400 nm aber noch ausreichend) nachgewiesen werden, da diese optischen Aufheller bei λ=400 nm noch genügend reflektieren (≥100 %).

Die Tabelle 1 fasst die wichtigsten Folieneigenschaften noch einmal zusammen.

**Tabelle 1**

| | bevorzugt | besonders bevorzugt | ganz besonders bevorzugt | Einheit | Messmethode |
|---|---|---|---|---|---|
| **Basisschicht (B) oder Monofolie** | | | | | |
| Konzentration an Bariumsulfat | 5-25 | 10-25 | 15-25 | Gew-% | |
| Partikeldurchmesser ($d_{50}$) des Bariumsulfats | 0,1 bis 5,0 | 0,15 bis 4,0 | 0,2 bis 3,0 | $\mu$m | s. Beschreibung |
| Konzentration des $TiO_2$ | ≥1,0 bis 15,0 | ≥1,0 bis 10,0 | ≥1,0 bis 5,0 | Gew.-% | |
| **Deckschicht A (bei mehrschichtigem Aufbau)** | | | | | |
| Konzentration an Bariumsulfat | 5-25 | 10-25 | 15-25 | Gew-% | |

(fortgesetzt)

| Deckschicht A (bei mehrschichtigem Aufbau) | | | | | |
|---|---|---|---|---|---|
| Partikeldurchmesser ($d_{50}$) des Bariumsulfats | 0,1 bis 5,0 | 0,15 bis 4,0 | 0,2 bis 3,0 | $\mu$m | s. Beschreibung |
| **Eigenschaften der Folie** | | | | | |
| Dicke der Folie | 10-500 | 25-500 | 50-500 | $\mu$m | |
| Transparenz der Folie | <60 | <50 | <40 | % | ASTM-D 1003-00 |
| Weißgrad der Folie nach Berger | >60 | >70 | >80 | | s. Beschreibung |
| Reflektion bei $\lambda$=254 nm | <50 | <40 | <30 | % | s. Beschreibung |
| Reflektion bei $\lambda$=365 nm | <50 | <40 | <30 | % | s. Beschreibung |
| Reflektion bei $\lambda$=400 nm | <100 und $\geq$50 | <95 und $\geq$55 | <90 und $\geq$60 | % | s. Beschreibung |

**Herstellungsverfahren**

Die Erfindung betrifft auch ein Verfahren zur Herstellung der erfindungsgemäß verwendeten Polyesterfolie nach dem an sich aus der Literatur bekannten Extrusions- bzw. Coextrusionsverfahren.

Im Rahmen dieses Verfahrens wird so vorgegangen, dass die der Monoschicht bzw. den einzelnen Schichten A, B, C etc. der Folie entsprechenden Schmelzen durch eine Flachdüse (co)extrudiert werden, die so erhaltene Folie zur Verfestigung auf einer oder mehreren Walzen abgezogen wird, die Folie anschließend biaxial gestreckt, die biaxial gestreckte Folie thermofixiert und gegebenenfalls an der zur Behandlung vorgesehenen Oberflächenschicht behandelt (z. B. coronabehandelt) wird.

Die biaxiale Streckung (Orientierung) wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst werden wie beim Coextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können, aber auch während der Extrusion hinzugegeben werden können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Verstreckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 90 bis 150°C Umgebungstemperatur durchgeführt. Das Längsstreckverhältnis liegt allgemein im Bereich von 2,5:1 bis 6:1, bevorzugt 3,0:1 bis 5,5:1. Das Querstreckverhältnis liegt allgemein im Bereich von 3,0:1 bis 5,0:1, bevorzugt 3,5:1 bis 4,5:1.

Vor der Querstreckung wird eine oder beide Oberflächen der Folie nach den bekannten Verfahren in-line beschichtet. Die In-line-Beschichtung wird zu einer verbesserten Haftung eines Klebers mit einem Haftvermittler durchgeführt. Als Haftvermittler für verschiedene Klebersysteme kommen Copolyesterbeschichtungen und Acrylatbeschichtungen zum Einsatz. Die Beschichtungen und der Antrag sind beispielsweise in EP-A-1 806 225 beschrieben. Weiterhin kann die biaxial orientierte Folie auf einer oder beiden Oberflächen z.B. mit einer Corona behandelt werden.

Bei der nachfolgenden Thermofixierung wird die Folie über eine Zeitdauer von etwa 0,1 bis 10 s bei einer Temperatur von ca. 150 bis 250°C gehalten. Anschließend wird die Folie in üblicher Weise aufgewickelt.

Wie aus der Figur 1 zu entnehmen ist zeigen die Beispiele im UV/Vis-Spektrum deutlich die gewünschte Verschiebung der Banden zu höheren Wellenlänge. Durch eine Prüfung der Folien mit handelsüblichen UV-Lampen wie die UV-Lampe der Fa. Merck, Darmstadt, DE, (4 W, 366 nm, Best.-Nr. 1.13203.0001) lässt sich leicht nachweisen, dass die Folien keine Fluoreszenz zeigen.

Zur Charakterisierung der Rohstoffe und der Folien wurden im Rahmen der vorliegenden Erfindung die folgenden Messmethoden benutzt:

ASTM = American Society for Testing and Materials

## Messung des mittleren Durchmessers $d_{50}$ (mittlerer Partikeldurchmesser)

Die Bestimmung des mittleren Durchmessers $d_{50}$ wird auf einem Master Sizer der Firma Malvern Instruments, GB, mittels Laserscannung durchgeführt [andere Messgeräte sind z. B. Horiba LA 500 (Horiba Europe GmbH, DE) oder Helos (Sympathec, DE), welche das gleiche Messprinzip verwenden)]. Die Proben werden dazu in eine Küvette mit Wasser gegeben und diese dann in das Messgerät gestellt. Mittels Laser wird die Dispersion abgerastert und aus dem Signal durch Vergleich mit einer Kalibrierkurve die Partikelgrößenverteilung bestimmt. Die Partikelgrößenverteilung ist durch zwei Parameter gekennzeichnet, den Medianwert $d_{50}$ (= Lagemaß für den Mittelwert) und verschiedene Streumaße, z. B. den so genannten SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert (auch Median genannt).

## Weißgrad

Der Weißgrad wird nach Berger bestimmt, wobei in der Regel mehr als 20 Folienlagen aufeinandergelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989), beschrieben.

## Transparenz

Die Messung an den Polyesterfolien erfolgt am Hazegard Hazemeter XL-211 der Fa. Byk Gardener nach ASTM-D 1003-00.

## UV-VIS /Reflektion

Die Messung der Reflektion erfolgt mittels eines Lambda 12 Spektrometers der Firma Perkin Elmer (USA). Die Messung erfolgt in Reflektion mit Hilfe einer Integrationskugel (RSA PE-20 Reflectance Spectroscopy Accessory der Herstellerfirma Labsphere, Inc., North Sutton, NH, USA). Die komplette Einheit zur Bestimmung der Reflektion besteht aus der zuvor genannten Integrationskugel, dem Probehalter und einem Weißstandard. Zur Kalibrierung des Gerätes (Basislinienabgleich) wird ein Weißstandard I.D. SRS-99-010 verwendet und in Reflektion gemessen.

## SV-Wert (Standard Viskosität)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV\ [\eta] = 6{,}907 \cdot 10\text{-}4\ SV\ (DCE) + 0{,}063096\ [dl/g]$$

Im Folgenden wird die Folienherstellung anhand von Beispielen näher erläutert.

**Beispiel 1** *(erfindungsgemäß verwendbar)*

Chips aus Polyethylenterephthalat enthaltend Bariumsulfat als Weißpigment wurden getrocknet und dem Extruder für die Monoschicht zugeführt. Dann wurde durch stufenweise Orientierung in Längs- und Querrichtung eine weiße Monofolie mit einer Gesamtdicke von 290 $\mu$m hergestellt.

Monoschicht:

| | |
|---|---|
| 96 Gew.-% | Polyethylenterephthalat mit 18,7 Gew.-% Bariumsulfat (Blanc fixe XR-HX, Sachtleben Chemie) als Weißpigment ohne optischen Aufheller und einem SV-Wert von 810 |
| 4 Gew.-% | Masterbatch der Fa. Sukano (Schindellegi, CH) mit 50 % Rutil-Titandioxid ($d_{50}$ Titandioxid ca. 0,3 $\mu$m) und 50 Gew.-% Polyethylenterephthalat mit einem SV-Wert von 800 |

Die Herstellungsbedingungen in den einzelnen Verfahrensschritten waren:

| | | | |
|---|---|---|---|
| Extrusion | Temperatur | 280 | °C |
| | Temperatur der Abzugswalze | 20 | °C |
| Längsstreckung | Temperatur | 70-120 | °C |
| | Längsstreckverhältnis | 3,2 | |
| Querstreckung | Temperatur | 80-135 | °C |
| | Querstreckverhältnis | 3,8 | |
| Fixierung | Temperatur | 230 | °C |
| | Dauer | 3 | s |

Es wurde eine Folie mit einer sehr guten Optik erhalten. Die Messwerte können der Tabelle 2 entnommen werden.

**Beispiel 2** *(erfindungsgemäß verwendbar)*

Chips aus Polyethylenterephthalat enthaltend Bariumsulfat als Weißpigment wurden getrocknet und dem Extruder für die Basisschicht (B) zugeführt. Ebenfalls wurden Chips aus Polyethylenterephthalat enthaltend Bariumsulfat als Weißpigment und ein Antiblockmittel getrocknet und dem Extruder für die beiden (gleichen) Deckschichten (A) zugeführt.

Dann wurde durch Coextrusion und anschließende stufenweise Orientierung in Längs- und Querrichtung eine weiße, dreischichtige Folie mit ABA-Aufbau und einer Gesamtdicke von 50 $\mu$m hergestellt. Die Dicke der beiden Deckschichten betrug jeweils 3 $\mu$m.

Basisschicht (B):

| | |
|---|---|
| 90 Gew.-% | Polyethylenterephthalat mit 20 Gew.-% Bariumsulfat (Blanc fixe XR-HX, Sachtleben Chemie) als Weißpigment und einem SV-Wert von 800 |
| 10 Gew.-% | Masterbatch der Fa. Sukano (Schindellegi, CH) mit 30 % Rutil-Titandioxid (mittlerer Durchmesser Titandioxid ca. 0,3 $\mu$m) und 70 Gew.-% Polyethylenterephthalat mit einem SV-Wert von 800 |

Deckschicht (A), Mischung aus:

| 85 Gew.-% | Polyethylenterephthalat mit 20 Gew.-% Bariumsulfat (Blanc fixe XR-HX, Sachtleben Chemie) als Weißpigment und einem SV-Wert von 800 |
| 10 Gew.-% | Gew.-% Masterbatch aus 96,25 Gew.-% Polyethylenterephthalat (SV-Wert von 800) und 3,75 Gew.-% Sylobloc® 44 H (synthetisches $SiO_2$ der Fa. Grace, $d_{50}$ = 2,5 $\mu$m) |
| 5 Gew.-% | Masterbatch der Fa. Sukano (Schindellegi, CH) mit 50 Gew.-% Rutil-Titandioxid ($d_{50}$ Titandioxid ca. 0,3 $\mu$m) und 50 Gew.-% Polyethylenterephthalat mit einem SV-Wert von 800 |

Die Herstellungsbedingungen in den einzelnen Verfahrensschritten waren:

| Extrusion | Temperaturen | A-Schicht: | 280 | °C |
| | | B-Schicht: | 280 | °C |
| | | A-Schicht: | 280 | °C |
| | Temperatur der Abzugswalze | | 20 | °C |
| Längsstreckung | Temperatur | | 70-120 | °C |
| | Längsstreckverhältnis | | 3,2 | |
| Querstreckung | Temperatur | | 80-135 | °C |
| | Querstreckverhältnis | | 3,8 | |
| Fixierung | Temperatur | | 230 | °C |
| | Dauer | | 3 | s |

Es wurde eine Folie mit einer sehr guten Optik erhalten. Die Messwerte können der Tabelle 2 entnommen werden.

**Vergleichsbeispiel 1** *(nicht erfindungsgemäß verwendbar)*

Die Rezeptur von Beispiel 1 wurde modifiziert und die Foliedicke geändert. Alle anderen Parameter wurden beibehalten. Es wurde eine weiße Monofolie in einer Gesamtdicke von 50 $\mu$m mit folgender Rezeptur nach dem Stand der Technik hergestellt:

Monoschicht:

| 100 Gew.-% | Polyethylenterephthalat mit 18,0 Gew.-% Bariumsulfat (Blanc fixe XR-HX, Sachtleben Chemie) als Weißpigment und 0,3 Gew.-% Hostalux KS (optischer Aufheller der Fa. Clariant, DE) und einem SV-Wert von 810 |

Die Folie zeigte starke Fluoreszenz, insbesondere bei 365 nm, und ist für den ID-Kartenmarkt nicht einsetzbar. Die Messwerte können der Tabelle 2 entnommen werden.

**Vergleichsbeispiel 2** *(nicht erfindungsgemäß verwendbar)*

Die Rezeptur von Vergleichsbeispiel 1 wurde modifiziert. Der optische Aufheller wurde weggelassen. Alle anderen Parameter wurden beibehalten.
Es wurde eine weiße 50 $\mu$m Monofolie mit folgender Rezeptur hergestellt:

| 100 Gew.-% | Polyethylenterephthalat mit 18,0 Gew.-% Bariumsulfat (Blanc fixe XR-HX, Sachtleben Chemie) als Weißpigment ohne optischen Aufheller und einem SV-Wert von 810 |

Die Fluoreszenz bei 365 nm war geringer als in Vergleichsbeispiel 1. Dennoch war die Fluoreszenz, insbesondere bei 365 nm, für die Verwendung der Folie für den ID-Kartenmarkt zu hoch.

**Tabelle 2**

| Beispiel | Weißgrad nach Berger | Transparenz [%] | Foliendicke [μm] | Reflektion bei λ=254 nm [%] | Reflektion bei λ=365 nm [%] |
|---|---|---|---|---|---|
| B1 | 87,2 | 5,9 | 290 | 18,1 | 24,1 |
| B2 | 94,5 | 24,9 | 50 | 18,5 | 21,1 |
| VB1 | 110,3 | 20,9 | 50 | 29,5 | 120,7 |
| VB2 | 88,1 | 27,0 | 50 | 20,3 | 83,5 |

**Patentansprüche**

1. Verwendung einer ein- oder mehrschichtigen, biaxial orientierten, weißen Polyesterfolie, welche

   a) Bariumsulfat in einer Konzentration von 5 bis 25 Gew.-% enthält (bezogen auf das Gewicht der Folie),
   b) Titandioxid in einer Menge von mindestens 1,0 Gew.-% enthält (bezogen auf das Gewicht der Folie) und
   c) auf einer Oberfläche mit einem Haftvermittler versehen ist,

   wobei die Folie keine Zusätze von optischen Aufhellern, die bei λ=400 nm ≥95 % reflektieren, enthält, zur Herstellung von Karten, in denen UV-detektierbare Sicherheitsmerkmale zu erkennen sind.

2. Verwendung nach Anspruch 1, **dadurch gekennzeichnet, dass** die Folie auf beiden Oberflächen mit einem Haftvermittler versehen ist.

3. Verwendung nach Anspruch 1 oder 2, **dadurch gekennzeichnet, dass** die Folie eine Transparenz von <60 % aufweist, gemessen nach ASTM-D 1003-00.

4. Verwendung nach Anspruch 1, 2 oder 3, **dadurch gekennzeichnet, dass** die Folie einen Weißgrad (nach Berger) von >60 aufweist, wie in der Beschreibung gemessen

5. Verwendung nach einem der Ansprüche 1 bis 4, **dadurch gekennzeichnet, dass** die Folie eine Reflektion bei λ=254 nm von <50 % aufweist, gemessen wie in der Beschreibung angegeben.

6. Verwendung nach einem der Ansprüche 1 bis 5, **dadurch gekennzeichnet, dass** die Folie eine Reflektion bei bei λ=365 nm von <50 % aufweist, gemessen wie in der Beschreibung angegeben.

7. Verwendung nach einem der Ansprüche 1 bis 6, **dadurch gekennzeichnet, dass** die Folie eine Reflektion bei λ=400 nm von <100 % und ≥50 % aufweist, gemessen wie in der Beschreibung angegeben.

8. Verwendung nach einem der Ansprüche 1 bis 7, **dadurch gekennzeichnet, dass** die Folie ein- oder dreischichtig aufgebaut ist.

9. Verwendung nach einem der Ansprüche 1 bis 8, **dadurch gekennzeichnet, dass** gefällte Bariumsulfat-Typen eingesetzt werden.

10. Verwendung nach einem der Ansprüche 1 bis 9, **dadurch gekennzeichnet, dass** die mittlere Teilchengröße ($d_{50}$) des Bariumsulfats im Bereich von 0,1 bis 5,0 μm liegt.

11. Verwendung nach einem der Ansprüche 1 bis 10, **dadurch gekennzeichnet, dass** ≤15 Gew.-% Titandioxid eingesetzt werden.

12. Verwendung nach einem der Ansprüche 1 bis 11, **dadurch gekennzeichnet, dass** das Titandioxid vom Rutiltyp ist.

13. Verwendung nach einem der Ansprüche 1 bis 12, **dadurch gekennzeichnet, dass** die Korngröße des Titandioxids zwischen 0,1 und 5 μm liegt.

**14.** Verwendung nach Anspruch 1 als ID-Karten, Kreditkarten oder RFID-Tags.

**15.** Karte, enthaltend eine ein- oder mehrschichtige, biaxial orientierte, weiße Polyesterfolie, welche

    a) Bariumsulfat in einer Konzentration von 5 bis 25 Gew.-% enthält (bezogen auf das Gewicht der Folie),
    b) Titandioxid in einer Menge von mindestens 1,0 Gew.-% enthält (bezogen auf das Gewicht der Folie) und
    c) auf einer Oberfläche mit einem Haftvermittler versehen ist,

wobei die Folie keine Zusätze von optischen Aufhellern, die bei $\lambda$=400 nm $\geq$95 % reflektieren, enthält.

**Claims**

**1.** Use of a single- or multilayer, biaxially oriented, white polyester film, which

    a) contains barium sulfate in a concentration of from 5 to 25 % by weight (based on the weight of the film),
    b) contains titanium dioxide in an amount of at least 1.0 % by weight (based on the weight of the film), and
    c) is provided with an adhesion promoter on one surface,

wherein the film does not contain additives of optical brighteners, which reflect at $\lambda$=400 nm $\geq$ 95 %, for production of cards, in which UV-detectable security features are recognizable.

**2.** Use according to claim 1, **characterized in that** the film is provided with an adhesion promoter on both surfaces.

**3.** Use according to claim 1 or 2, **characterized in that** the film has a transparency of <60 %, measured according to ASTM-D 1003-00.

**4.** Use according to claim 1, 2, or 3, **characterized in that** the film has a whiteness degree (according to Berger) of >60, as measured in the description.

**5.** Use according to one of claims 1 to 4, **characterized in that** the film has a reflection at $\lambda$=254 nm of <50 %, measured as given in the description.

**6.** Use according to one of claims 1 to 5, **characterized in that** the film has a reflection at $\lambda$=365 nm of <50 %, measured as given in the description.

**7.** Use according to one of claims 1 to 6, **characterized in that** the film has a reflection at $\lambda$=400 nm of <100 % and $\geq$50 % , measured as given in the description.

**8.** Use according to one of claims 1 to 7, **characterized in that** the film is composed of one or three layers.

**9.** Use according to one of claims 1 to 8, **characterized in that** precipitated barium sulfate types are used.

**10.** Use according to one of claims 1 to 9, **characterized in that** the average particle size ($d_{50}$) of the barium sulfate is within the range of 0.1 to 5.0 $\mu$m.

**11.** Use according to one of claims 1 to 10, **characterized in that** $\leq$15 % by weight titanium dioxide are used.

**12.** Use according to one of claims 1 to 11, **characterized in that** the titanium dioxide is of the rutile type.

**13.** Use according to one of claims 1 to 12, **characterized in that** the grain size of the titanium dioxide is between 0.1 to 5 $\mu$m.

**14.** Use according to claim 1 as ID cards, credit cards or RFID tags.

**15.** Card, containing a single- or multilayer, biaxially oriented, white polyester film, which

    a) contains barium sulfate in a concentration of from 5 to 25 % by weight (based on the weight of the film),

b) contains titanium dioxide in an amount of at least 1.0 % by weight (based on the weight of the film), and

c) is provided with an adhesion promoter on one surface,

wherein the film does not contain additives of optical brighteners, which reflect at $\lambda$=400 nm $\geq$ 95 %.

## Revendications

1. Utilisation d'une feuille de polyester blanche, biaxialement orientée, monocouche ou multicouche, laquelle

a) contient du sulfate de baryum dans une concentration de 5 à 25 % en poids (par rapport au poids de la feuille),
b) contient du dioxyde de titane dans une quantité d'au moins 1,0 % en poids (par rapport au poids de la feuille) et
c) est pourvue d'un agent adhésif sur une surface,

la feuille ne contenant aucun additif d'éclaircissement optique qui réfléchit $\geq$ 95 % à $\lambda$ = 400 nm, pour fabriquer des cartes dans lesquelles des caractéristiques de sécurité sont détectées.

2. Utilisation selon la revendication 1, **caractérisée en ce que** la feuille est pourvue d'un agent adhésif sur les deux surfaces.

3. Utilisation selon la revendication 1 ou 2, **caractérisée en ce que** la feuille présente une transparence de < 60 %, mesurée selon ASTM-D 1003-00.

4. Utilisation selon la revendication 1, 2 ou 3, **caractérisée en ce que** la feuille présente un degré de blanc (selon Berger) de > 60, comme mesuré dans la description.

5. Utilisation selon l'une quelconque des revendications 1 à 4, **caractérisée en ce que** la feuille présente une réflexion de < 50 % à $\lambda$ = 254 nm, mesurée comme indiqué dans la description.

6. Utilisation selon l'une quelconque des revendications 1 à 5, **caractérisée en ce que** la feuille présente une réflexion de < 50 % à $\lambda$ = 365 nm, mesurée comme indiqué dans la description.

7. Utilisation selon l'une quelconque des revendications 1 à 6, **caractérisée en ce que** la feuille présente une réflexion de < 100 % et $\geq$ 50 % à $\lambda$ = 400 nm, mesurée comme indiqué dans la description.

8. Utilisation selon l'une quelconque des revendications 1 à 7, **caractérisée en ce que** la feuille a une structure monocouche ou tricouche.

9. Utilisation selon l'une quelconque des revendications 1 à 8, **caractérisée en ce que** des types de sulfate de baryum précipités sont employés.

10. Utilisation selon l'une quelconque des revendications 1 à 9, **caractérisée en ce que** la taille moyenne de particule ($d_{50}$) du sulfate de baryum est de l'ordre de 0,1 à 5,0 $\mu$m.

11. Utilisation selon l'une quelconque des revendications 1 à 10, **caractérisée en ce que** $\leq$ 15 % en poids de dioxyde de titane sont employés.

12. Utilisation selon l'une quelconque des revendications 1 à 11, **caractérisée en ce que** le dioxyde de titane est du type rutile.

13. Utilisation selon l'une quelconque des revendications 1 à 12, **caractérisée en ce que** la taille moyenne de particule du dioxyde de titane se situe entre 0,1 et 5 $\mu$m.

14. Utilisation selon la revendication 1 comme cartes d'identité, cartes de crédit ou étiquettes RFID.

15. Carte, contenant une feuille de polyester blanche, biaxialement orientée, monocouche ou multicouche, laquelle

a) contient du sulfate de baryum dans une concentration de 5 à 25 % en poids (par rapport au poids de la feuille),

b) contient du dioxyde de titane dans une quantité d'au moins 1,0 % en poids (par rapport au poids de la feuille) et
c) est pourvue d'un agent adhésif sur une surface,

la feuille ne contenant aucun additif d'éclaircissement optique qui réfléchit $\geq$ 95% à $\lambda$ = 400 nm.

Figur 1

EP 2 000 498 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1125966 A
- US 4780402 A

- EP 1806225 A

**In der Beschreibung aufgeführte Nicht-Patentliteratur**

- *Kunststoff-Journal,* vol. 8 (10), 30-36
- *KUNSTSTOFF-JOURNAL,* 1974, 36-31

- **HANSL LOOS.** Farbmessung. Verlag Beruf und Schule, Itzehoe, 1989